(19) Europäisches Patentamt
European Patent Office
Office européen des brevets

(11) **EP 3 486 342 B1**

(12) **EUROPEAN PATENT SPECIFICATION**

(45) Date of publication and mention
of the grant of the patent:
**30.08.2023 Bulletin 2023/35**

(21) Application number: **17827608.5**

(22) Date of filing: **11.07.2017**

(51) International Patent Classification (IPC):
**C22C 21/02** *(2006.01)*    **C22C 21/06** *(2006.01)*
**C22F 1/00** *(2006.01)*    **C22F 1/05** *(2006.01)*

(52) Cooperative Patent Classification (CPC):
**C22C 21/08; C22C 21/02; C22C 21/06; C22F 1/05;**
C22F 1/00; Y02E 60/10

(86) International application number:
**PCT/JP2017/025211**

(87) International publication number:
**WO 2018/012481 (18.01.2018 Gazette 2018/03)**

(54) **ALUMINUM ALLOY MATERIAL, AND ELECTROCONDUCTIVE MEMBER, BATTERY MEMBER, FASTENING COMPONENT, SPRING COMPONENT AND STRUCTURAL COMPONENT USING SAME**

ALUMINIUMLEGIERUNG UND ELEKTRISCH LEITENDES ELEMENT, BATTERIEELEMENT, BEFESTIGUNGSELEMENT, FEDERELEMENT UND STRUKTURBAUTEIL DAMIT

MATÉRIAU D'ALLIAGE D'ALUMINIUM, ET ÉLÉMENT CONDUCTEUR D'ÉLECTRICITÉ, ÉLÉMENT DE BATTERIE, COMPOSANT DE FIXATION ET COMPOSANT STRUCTURAL LE METTANT EN UVRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2016 JP 2016138841**

(43) Date of publication of application:
**22.05.2019 Bulletin 2019/21**

(73) Proprietor: **Furukawa Electric Co., Ltd.**
**Chiyoda-ku**
**Tokyo 100-8322 (JP)**

(72) Inventors:
• **KANEKO Hiroshi**
**Tokyo 100-8322 (JP)**
• **ARAKI Akiyoshi**
**Tokyo 100-8322 (JP)**
• **SUSAI Kyota**
**Tokyo 100-8322 (JP)**

(74) Representative: **Zacco GmbH**
**Bayerstrasse 83**
**80335 München (DE)**

(56) References cited:
WO-A1-2013/146762    JP-A- 2004 134 212
JP-A- 2010 280 969    JP-A- 2010 280 969
JP-A- 2014 125 676    JP-A- 2017 014 570

**Description**

Technical Field

The present invention relates to an aluminum alloy material having a high strength. Such an aluminum alloy material is used for a wide range of applications (for example, a conductive member, a battery member, a fastening component, a spring component, and a structural component).

Background Art

In recent years, with the diversification of the shapes of metal members, a technique is being widely studied which causes a metal powder to be sintered using electron beams or lasers or the like, thereby molding a three-dimensional structure having a desired shape. However, such a technique uses the metal powder, and has for example the following problem: an excessively fine metal powder is apt to explode.

Therefore, these days, a technique is being developed which molds a three-dimensional structure according to a method for knitting, weaving, tying, jointing, or connecting metal fine wires. The consideration of such a method is advanced, for example, as Wire-Woven Cellular Materials, and the application of the method to a battery component, a heat sink, and an impact absorption member or the like is expected.

An iron-based or copper-based wire rod has been widely used as the metal fine wire. These days, there is considered substitution of the iron-based or copper-based metal material to an aluminum-based material having a small specific gravity, a large thermal expansion coefficient, comparatively good electrical and heat conductivities, and excellent corrosion resistance, particularly having a small elastic coefficient, and flexibly elastically deformed as compared with the iron-based or copper-based metal material.

However, a pure aluminum material has the following problem: it has a lower strength than that of the iron-based or copper-based metal material. A 2000 or 7000-series aluminum alloy material which is an aluminum-based alloy material having a comparatively high strength has the following problem: it has poor corrosion resistance and stress corrosion cracking resistance.

Therefore, these days, there is widely used a 6000-series aluminum alloy material which contains Mg and Si and has excellent electrical and heat conductivities, and excellent corrosion resistance. Such a 6000-series aluminum alloy material has a higher strength in aluminum-based alloy materials, but it does not have a sufficient strength, whereby a further improvement in a strength is desired.

On the other hand, a method according to crystallization of an aluminum alloy material containing an amorphous phase (Patent Literature 1), a method for forming fine crystal grains according to the ECAP method (Patent Literature 2), a method for forming fine crystal grains according to cold working at a temperature equal to or less than room temperature (Patent Literature 3), and a method for dispersing carbon nanofibers (Patent Literature 4) or the like are known as a method for improving the strength of the aluminum alloy material. However, the methods manufacture aluminum alloy materials having small sizes, which make it difficult to industrially put the aluminum alloy materials to practical use.

A method for controlling a rolling temperature to obtain an Al-Mg-based alloy having a fine structure is disclosed in Patent Literature 5. The method has excellent industrial mass productivity, but a further improvement in a strength is required.

Patent Literature 6 discloses an aluminum alloy wire. The aluminum alloy wire is formed from an aluminum alloy containing 0.2-0.8 mass% Si, 0.36-1.5 mass% Fe, ≤0.2 mass% Cu, 0.45-0.9 mass% Mg, 0.005-0.03 mass% Ti and the balance being Al and unavoidable impurities.

Document List

Patent Literatures

Patent Literature 1: Japanese Patent Application Publication No. 5-331585
Patent Literature 2: Japanese Patent Application Publication No. 9-137244
Patent Literature 3: Japanese Patent Application Publication No. 2001-131721
Patent Literature 4: Japanese Patent Application Publication No. 2010-159445
Patent Literature 5: Japanese Patent Application Publication No. 2003-027172
Patent Literature 6: JP 2010 280969 A

Summary of Invention

Technical Problem

It is an object of the present invention to provide: an aluminum alloy material which can serve as a substitute for an iron-based or copper-based metal material and has a high strength; and a conductive member, a battery member, a fastening component, a spring component, and a structural component including the aluminum alloy material.

Solution to Problem

Intense studies repeated by the present inventors have resulted in finding that the problem is solved by an aluminum alloy material having the features of claim 1. Preferred embodiments of the present invention are described in the dependent claims.

Effects of Invention

The present invention can provide an aluminum alloy material having a predetermined alloy composition, wherein the aluminum alloy material has a fibriform metallographic structure where crystal grains extend so as to be aligned in one direction; and in a cross section parallel to the one direction, an average value of a size perpendicular to a longitudinal direction of the crystal grains is 270 nm or less, whereby the aluminum alloy material has a high strength comparable to that of an iron-based or copper-based metal material. Furthermore, the present invention can provide a conductive member, a battery member, a fastening component, a spring component, and a structural component including the aluminum alloy material.

Brief Description of Drawings

[Fig. 1] A perspective view schematically showing the situation of the metallographic structure of an aluminum alloy material according to the present invention.

[Fig. 2] A graph showing the relationship between the degree of working and tensile strength of each of pure aluminum, pure copper, and an aluminum alloy material according to the present invention.

[Fig. 3] A STEM image showing the situation of a metallographic structure in a cross section parallel to a working direction X of an aluminum alloy material according to the present Examples.

Description of Embodiments

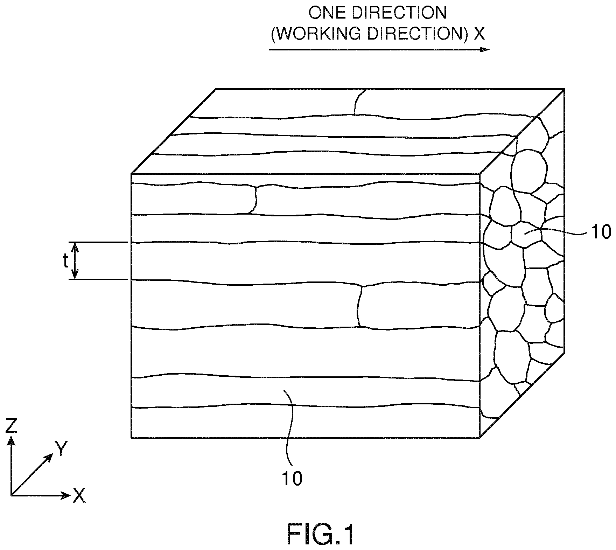

Hereinafter, preferred embodiments of an aluminum alloy material of the present invention are described in detail.
The aluminum alloy material according to the present invention has an alloy composition consisting of 0.2 to 1.8% by mass of Mg, 0.2 to 2.0% by mass of Si, 0.05 to less than 0.60by mass of Fe, with the balance containing Al and inevitable impurities, wherein: the aluminum alloy material has a fibriform metallographic structure where crystal grains extend so as to be aligned in one direction; and in a cross section parallel to the one direction, the average value of a size perpendicular to the longitudinal direction of the crystal grains is 270 nm or less.
Herein, the "crystal grains" refer to portions surrounded by orientation difference boundaries. Here, the "orientation difference boundary" refers to a boundary where contrast discontinuously changes in a case in which a metallographic structure is observed by scanning transmission electron microscopy (STEM). The size perpendicular to the longitudinal direction of the crystal grains corresponds to the interval of the orientation difference boundaries.
The aluminum alloy material according to the present invention has a fibriform metallographic structure where crystal grains extend so as to be aligned in one direction. Here, Fig. 1 shows a perspective view schematically showing the situation of the metallographic structure of the aluminum alloy material according to the present invention. As shown in Fig. 1, the aluminum alloy material of the present invention has a fibriform structure where crystal grains 10 each having an elongated shape extend so as to be aligned in one direction X. The crystal grains each having an elongated shape are completely different from conventional fine crystal grains and flat crystal grains each merely having a large aspect ratio. Specifically, the crystal grains of the present invention each have an elongated shape as with a fiber, and the average value of a size t perpendicular to a longitudinal direction X thereof is 270 nm or less. The fibriform metallographic structure where the fine crystal grains extend so as to be aligned in one direction can be said to be a novel metallographic structure which is not included in a conventional aluminum alloy.

The aluminum alloy material of the present invention has the fibriform metallographic structure where the crystal grains extend so as to be aligned in one direction, and in the cross section parallel to the one direction, the average value of the size perpendicular to the longitudinal direction of the crystal grains is controlled to 270 nm or less, whereby a high strength (for example, a tensile strength of 480 MPa or more and a Vickers hardness (HV) of 125 or more) comparable to that of an iron-based or copper-based metal material can be attained.

The fine crystal grain size leads directly to an effect of improving grain boundary corrosion, an effect of improving fatigue characteristics, an effect of reducing the roughness of a surface after plastic working, and an effect of reducing sagging and burr during shearing working, or the like in addition to an improvement in a strength, which provides effects of generally improving the functions of the material.

Such an aluminum alloy material of the present invention can attain a high strength even in an Al-Mg-Si-Fe-based alloy material having an alloy composition containing less constituent elements, and the less constituent elements can also largely improve recyclability.

(1) Alloy composition

The alloy composition of the aluminum alloy material of the present invention and the effects of the alloy composition are described.

<Mg: 0.2 to 1.8% by mass>

Mg (magnesium) has an effect of strengthening by forming a solid solution in an aluminum matrix, and has an effect of improving a tensile strength by a synergistic effect with Si. In a case where it forms a Mg-Si cluster as a solute atom cluster, it is an element having an effect of improving a tensile strength and an elongation. However, in a case where a Mg content is less than 0.2% by mass, the above function effects are insufficient. In a case where the Mg content is in excess of 1.8% by mass, a crystallized material is formed, which causes deterioration in workability (wire drawing workability and bending workability or the like). Therefore, the Mg content is 0.2 to 1.8% by mass.

< Si: 0.2 to 2.0% by mass>

Si (silicon) has an effect of strengthening by forming a solid solution in an aluminum matrix, and has an effect of improving a tensile strength and bending fatigue resistance by a synergistic effect with Mg. In a case where it forms a Mg-Si cluster or an Si-Si cluster as a solute atom cluster, it is an element having an effect of improving a tensile strength and an elongation. However, in a case where a Si content is less than 0.2% by mass, the above function effects are insufficient. In a case where the Si content is in excess of 2.0% by mass, a crystallized material is formed, which causes deterioration in workability. Therefore, the Si content is 0.2 to 2.0% by mass.

<Fe: 0.05 to less than 0.60% by mass>

Fe (iron) is an element which contributes to refinement of crystal grains by forming an Al-Fe based intermetallic compound and provides an improved tensile strength. Here, the intermetallic compound refers to a compound composed of two or more kinds of metals. Fe dissolves in Al only by 0.05% by mass at 655°C, and even less at room temperature. Accordingly, the remaining Fe which cannot dissolve in Al is crystallized or precipitated as an intermetallic compound such as Al-Fe, Al-Fe-Si, or Al-Fe-Si-Mg. An intermetallic compound mainly composed of Fe and Al as exemplified by the above-described intermetallic compounds is herein referred to as a Fe-based compound. This intermetallic compound contributes to the refinement of crystal grains and provides an improved tensile strength. Fe has, also by Fe which has dissolved in Al, an effect of providing an improved tensile strength. In a case where a Fe content is less than 0.01% by mass, these function effects are insufficient. In a case where the Fe content is in excess of 1.50% by mass, a crystallized material increases, which causes deterioration in workability. Here, the crystallized material refers to an intermetallic compound occurring during the casting solidification of an alloy. In a case where a cooling speed during casting is slow, the dispersion of the Fe-based compound is sparse, which causes the increased degree of a negative effect. accordance with the present invention, the Fe content is 0.05 to less than 0.60% by mass.

<Balance: Al and Inevitable Impurities>

The balance, i.e., components other than those described above, includes Al (aluminum) and inevitable impurities. Herein, the inevitable impurities mean impurities contained by an amount which may be contained inevitably during a manufacturing process. Since the inevitable impurities may cause a decrease in conductivity depending on the content thereof, it is preferable to suppress the content of the inevitable impurities to some extent considering the decrease in the conductivity. Examples of components which are inevitable impurities include B (boron), Ti (titanium), Cr (chromium), Mn (manganese), Cu (copper), Ni (nickel), Zn (zinc), Zr (zirconium), Bi (bismuth), Pb (lead), Ga (gallium), Sn (tin), and Sr (strontium). The upper limit of the content of each of the components is 0.05% by mass or less, and the total amount of the components is 0.15% by mass or less.

Such an aluminum alloy material can be obtained by combining and controlling alloy compositions and manufacturing processes. Hereinafter, a suitable manufacturing method of the aluminum alloy material of the present invention is described.

(2) Manufacturing method of aluminum alloy material according to one example of present invention

Such an aluminum alloy material according to one example of the present invention particularly attains an improvement in a strength by introducing a crystal grain boundary into an Al-Mg-Si-Fe-based alloy at a high density. Therefore, an approach to an improvement in a strength is largely different from that in a method for precipitation-hardening a Mg-Si compound which has been generally performed in a conventional aluminum alloy material.

In a preferable manufacturing method of the aluminum alloy material of the present invention, an aluminum alloy material having a predetermined alloy composition is subjected to cold working [1] at a degree of working of 4 or more as last working without subjecting the aluminum alloy material to an aging precipitation heat treatment [0]. Refine annealing [2] may be performed after the cold working [1] if needed. Hereinafter, the manufacturing method is described in detail.

Usually, in a case in which deformation stress is applied to a metal material, crystal slip occurs as the elementary step of the deformation of a metal crystal. The metal material in which the crystal slip is apt to occur has small stress required for deformation, whereby it can be said to be have a low strength. Therefore, it is important to suppress the crystal slip which occurs in the metallographic structure in order to provide the improvement in the strength of the metal material. Examples of the prevention factor of such crystal slip include the existence of the crystal grain boundary in the metallographic structure. Such a crystal grain boundary can prevent the crystal slip from spreading in the metallographic structure in a case in which the deformation stress is applied to the metal material. As a result, the strength of the metal material is improved.

Therefore, it is considered that, in order to improve the strength of the metal material, the crystal grain boundary is desirably introduced at a high density into the metallographic structure. Here, the formation mechanism of the crystal grain boundary is considered to be the division of the metal crystal involving the following deformation of the metallographic structure, for example.

Usually, in a polycrystalline material, the difference between the orientations of adjacent crystal grains, and the space distribution of distortion between the vicinity of a surface layer brought into contact with a working tool and the inside of bulk cause a stress state to be in a complicated multiaxial state. Under these influences, a crystal grain which is in a single orientation before deformation is divided in a plurality of orientations with the deformation, and a crystal grain boundary is formed between the divided crystals.

However, the formed crystal grain boundary has surface energy in a structure deviated from the closest packed atomic arrangement of usual twelve coordination. Therefore, it is considered that, in the usual metallographic structure, in a case in which the crystal grain boundary has a given density or more, the increased internal energy serves as a driving force, whereby dynamic or static recovery and recrystallization occur. Therefore, usually, it is considered that the increase and reduction of the crystal grain boundary simultaneously occur even if the amount of deformation is increased, whereby a grain boundary density is saturated.

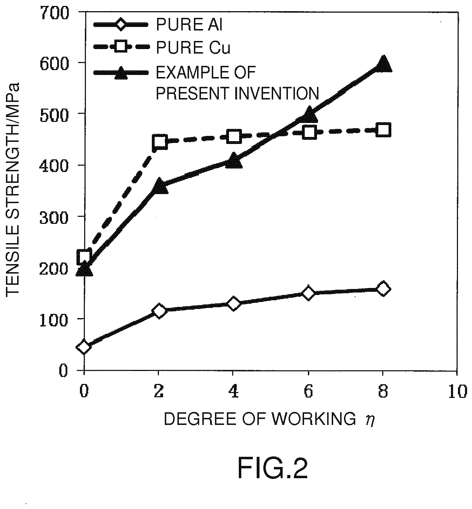

Such a phenomenon coincides with also the relationship between a degree of working and a tensile strength in pure aluminum or pure copper which is a conventional metallographic structure. Fig. 2 shows a graph of the relationship between the degree of working and tensile strength of each of pure aluminum, pure copper, and the aluminum alloy material according to the present invention.

As shown in Fig. 2, pure aluminum or pure copper which is a usual metallographic structure has an improved tensile strength (hardening) at a comparatively low degree of working, but as the degree of working increases, the amount of hardening tends to be saturated. Here, it is considered that the degree of working corresponds to the amount of deformation applied to the metallographic structure, and the saturation of the amount of hardening corresponds to the saturation of the grain boundary density.

On the other hand, it was found that the aluminum alloy material of the present invention is continuously hardened even if the degree of working increases, and the strength of the aluminum alloy material continuously increases with working. This is considered to be because the aluminum alloy material of the present invention has the above alloy composition, and particularly, predetermined amounts of Mg and Si are compositely added to the aluminum alloy material, whereby the increase in the internal energy can be suppressed even if the crystal grain boundary has a given density or more in the metallographic structure. This is considered to make it possible to prevent recovery and recrystallization in the metallographic structure, and effectively increase the crystal grain boundary in the metallographic structure.

The mechanism of the improvement in the strength provided by the composite addition of Mg and Si is not necessarily clear. However, the mechanism is considered to be based on the following (i) and (ii): (i) by combining and using a Mg atom having a greater atomic radius than that of an Al atom and an Si atom having a smaller atomic radius than that of the Al atom, the atoms are always filled densely (arranged) in the aluminum alloy material; and (ii) by causing divalent Mg and tetravalent Si to coexist with respect to a trivalent Al atom, a trivalent state can be formed in the entire aluminum alloy material, which attains valence stability, whereby the increase in the internal energy involving working can be effectively suppressed.

In the present invention, the degree of working in the cold working [1] is set to 4 or more. In particular, working at a large degree of working makes it possible to prompt the division of the metal crystal involving the deformation of the metallographic structure, and to introduce the crystal grain boundary into the aluminum alloy material at a high density. As a result, the grain boundary of the aluminum alloy material is strengthened to largely improve the strength. Such a degree of working is set to preferably 5 or more, more preferably 6 or more, and still more preferably 7 or more. The upper limit of the degree of working is not particularly prescribed, and usually 15 or less.

A degree of working $\eta$ is represented by the following formula (1) in a case in which a cross-sectional area before working is taken as s1, and a cross-sectional area after working is taken as s2 (s1>s2).

$$\text{Degree of working (non-dimension): } \eta = \ln (s1/s2) \ldots (1)$$

A working rate is preferably set to 98.2% or more, and more preferably 99.8% or more. A working rate R is represented by the following formula (2) using the above s1 and s2.

$$\text{Working rate (\%): } R = \{(s1\text{-}s2)/s1\} \times 100 \ldots (2)$$

A working method may be appropriately selected according to the intended shape (a wire bar, a plate, a strip, a foil or the like) of the aluminum alloy material, and examples thereof include a cassette roller die, groove roll rolling, round wire rolling, drawing working using a die or the like, and swaging. Various conditions (kind of lubricating oil, working speed, and working heat generation or the like) in the above working may be appropriately adjusted in a known range.

The aluminum alloy material is not particularly limited as long as it has the above alloy composition. For example, it is possible to appropriately select and use an extruded material, an ingot material, a hot-rolled material, and a cold-rolled material or the like according to the purpose of use.

In the present invention, the aging precipitation heat treatment [0] which has been conventionally performed before the cold working [1] is not performed. Such an aging precipitation heat treatment [0] usually retains the aluminum alloy material at 160 to 240°C for 1 minute to 20 hours, to prompt precipitation of a Mg-Si compound. However, in a case in which the aluminum alloy material is subjected to such an aging precipitation heat treatment [0], the above cold working [1] at the high degree of working cannot be performed since working cracks occur in the material. Since a high aging temperature causes an overaging state, the working cracks may not occur even in the above cold working [1] at the high degree of working. However, in this case, Mg and Si are discharged from an Al matrix phase as a Mg-Si compound, whereby the stability of the grain boundary remarkably deteriorates.

In the present invention, the refine annealing [2] may be performed after the cold working [1] for the purposes of release of residual stress and an improvement in an elongation. In a case in which the refine annealing [2] is performed, a treatment temperature is set to 50 to 160°C. In a case in which the treatment temperature of the refine annealing [2] is less than 50°C, the above effects are less likely obtained. In a case in which the treatment temperature is in excess of 160°C, recovery or recrystallization causes the growth of the crystal grains to occur, which causes a decrease in the strength. The retention time of the refine annealing [2] is preferably 1 to 48 hours. The various conditions of such a heat treatment can be appropriately adjusted according to the kind and amount of inevitable impurities, and the solid solution/precipitation state of the aluminum alloy material.

In the present invention, as described above, the aluminum alloy material is subjected to working at a high degree of working according to a method such as drawing using a die, or rolling. Therefore, as a result, an elongated aluminum alloy material is obtained. On the other hand, a conventional method for manufacturing an aluminum alloy material such as powder sintering, compression torsion working, high pressure torsion (HPT), forge working, or equal channel angular pressing (ECAP) makes it difficult to provide the elongated aluminum alloy material. The aluminum alloy material of the present invention is preferably manufactured so as to have a length of 10 m or more. The upper limit of the length of the aluminum alloy material during manufacturing is not particularly provided, and preferably 6000 m or less in consideration of workability or the like.

Since it is effective to increase the degree of working for providing fine crystal grains as described above, the configuration of the present invention is likely to be attained as the diameter of the aluminum alloy material of the present invention is smaller, particularly, in a case in which the aluminum alloy material is produced as a wire bar, or as the thickness of the aluminum alloy material is smaller in a case in which the aluminum alloy material is produced as a plate or a foil.

In particular, in a case in which the aluminum alloy material of the present invention is a wire bar, the wire bar has a wire diameter of preferably 1 mm or less, more preferably 0.5 mm or less, still more preferably 0.1 mm or less, and particularly preferably 0.07 mm or less. The upper limit is not particularly provided, and preferably 30 mm or less. The aluminum alloy wire bar of the present invention has one advantage that it can be used as a thin single wire.

As described above, the aluminum alloy material of the present invention is slimly or thinly worked. A plurality of aluminum alloy materials are prepared and joined to provide a large or thick product, which can also be used for the intended application. A known method can be used for the joining method, and examples thereof include pressure welding, welding, joining using an adhesive, and friction stirring joining. In a case in which the aluminum alloy material is the wire bar, a plurality of wire bars are bundled, and twisted to provide a twisted product, which can also be used for the intended application as an aluminum alloy twisted wire. The aluminum alloy material subjected to the cold working [1] may be subjected to working according to joining or twisting, and then subjected to the step of the refine annealing [2].

(3) Organizational feature of aluminum alloy material of present invention

The aluminum alloy material of the present invention manufactured by the above manufacturing method is obtained by introducing the crystal grain boundary at a high density into the metallographic structure. The aluminum alloy material of the present invention is characterized by having the fibriform metallographic structure where the crystal grains extend so as to be aligned in one direction, and in the cross section parallel to the one direction, the average value of a size perpendicular to the longitudinal direction of the crystal grains is 270 nm or less. The aluminum alloy material has a non-conventional specific metallographic structure, whereby the aluminum alloy material can exhibit a particularly excellent strength.

The metallographic structure of the aluminum alloy material of the present invention is the fibriform structure, and the crystal grains each having an elongated shape extend in fiber forms so as to be aligned in one direction. Here, the "one direction" corresponds to the working direction of the aluminum alloy material. In a case in which the aluminum alloy material is the wire bar, the "one direction" corresponds to a wire drawing direction, for example. In a case in which the aluminum alloy material is a plate or a foil, the "one direction" corresponds to a rolling direction, for example. Particularly, the aluminum alloy material of the present invention exhibits a particularly excellent strength with respect to tensile stress parallel to the working direction.

The one direction preferably corresponds to the longitudinal direction of the aluminum alloy material. Specifically, as long as the aluminum alloy material is not divided into pieces so as to have a size shorter than a size perpendicular to the working direction, the working direction of the aluminum alloy material usually corresponds to the longitudinal direction.

In the cross section parallel to the one direction, the average value of a size perpendicular to the longitudinal direction of the crystal grains is 270 nm or less, more preferably 220 nm or less, still more preferably 170 nm or less, and particularly preferably 120 nm or less. In the fibriform metallographic structure where the crystal grains having a small diameter (size perpendicular to the longitudinal direction of the crystal grains) extend in one direction, the crystal grain boundary is formed at a high density. Such a metallographic structure makes it possible to effectively inhibit the crystal slip involving deformation, which makes it possible to attain a non-conventional high strength. The lower limit of the average value of a size perpendicular to the longitudinal direction of the crystal grains is preferably 50 nm or more from the viewpoint of preventing deterioration in ductility.

The size of the longitudinal direction of the crystal grains is not necessarily specified, and preferably 1200 nm or more, more preferably 1700 nm or more, and still more preferably 2200 nm or more. The aspect ratio of the crystal grains is preferably in excess of 10, and more preferably 20 or more. The upper limit of the aspect ratio of the crystal grains is preferably 2 million or less from the viewpoint of preventing deterioration in ductility.

(4) Characteristics of aluminum alloy material of present invention

[Tensile strength]

A tensile strength is measured according to JIS Z2241: 2011. Detailed measurement conditions are described in the column of Examples to be described below.

In a case in which the aluminum alloy material of the present invention is particularly the wire bar, the aluminum alloy material has a tensile strength of 480 MPa or more. This is a strength equivalent to that of a copper wire subjected to wire drawing working at a general high degree of working. The aluminum alloy material has a tensile strength of more preferably 520 MPa or more, still more preferably 560 MPa or more, particularly preferably 600 MPa or more, and yet still more preferably 640 MPa or more. The aluminum alloy material of the present invention having such a high strength can be used as substitution of a strong wire drawing worked material made of a thin copper alloy such as a Cu-Sn and Cu-Cr alloy. Such an aluminum alloy material can also be used as substitution of a steel-based or stainless-based material. The upper limit of the tensile strength of the aluminum alloy material of the present invention is not particularly limited, and 1000 MPa or less, for example.

[Vickers hardness (HV)]

A Vickers hardness (HV) is a value measured according to JIS Z 2244: 2009. Detailed measurement conditions are described in the column of Examples to be described below. The Vickers hardness (HV) of a worked product which has been already turned into a component can be measured as follows: the worked product is disassembled; the cross section thereof is subjected to mirror polishing; and the Vickers hardness of the cross section is measured.

In a case in which the aluminum alloy material of the present invention is particularly the wire bar, the Vickers hardness (HV) is preferably 125 or more. This is a strength equivalent to that of a copper wire subjected to general strong wire drawing working. The Vickers hardness (HV) of the aluminum alloy material is more preferably 140 or more, still more preferably 150 or more, particularly preferably 160 or more, and yet still more preferably 170 or more. The aluminum alloy material of the present invention having such a high strength can be used as substitution of a strong wire drawing worked material made of a thin copper alloy such as a Cu-Sn or Cu-Cr alloy. Such an aluminum alloy material can also be used as substitution of a steel-based or stainless-based material. The upper limit of the Vickers hardness (HV) of the aluminum alloy material of the present invention is not particularly limited, and 300 or less, for example, and preferably 250 or less.

(5) Application of aluminum alloy material of present invention

The aluminum alloy material of the present invention can be directed to all the applications in which an iron-based material, a copper-based material, and an aluminum-based material are used. Specifically, the aluminum alloy material can be suitably used as a conductive member such as an electric wire or a cable, a battery member such as a current collector mesh or net, a fastening component such as a screw, a bolt, or a rivet, a spring component such as a coil spring, an electric contact spring member such as a connector or a terminal, a structural component such as a shaft or a frame, a guide wire, a semiconductor bonding wire, and a winding wire used for a dynamo or a motor, or the like.

More specific application examples of the conductive member include a power electric wire such as an overhead power line, OPGW, a subterranean electric wire, or a submarine cable, a communication electric wire such as a telephone cable or a coaxial cable, an appliance electric wire such as a wired drone cable, a cab tire cable, an EV/HEV charge cable, a twisted cable for wind power on the ocean, an elevator cable, an umbilical cable, a robot cable, a train overhead wire, or a trolley wire, a transportation electric wire such as an automobile wire harness, a vessel electric wire, and an airplane electric wire, a bus bar, a lead frame, a flexible flat cable, a lightning rod, an antenna, a connector, a terminal, and a cable braid.

Examples of the battery member include a solar cell electrode.

More specific application examples of the structural member include a scaffold in a construction site, a conveyor mesh belt, a clothing metal fiber, a chain armor, a fence, an insect repellent net, a zipper, a fastener, a clip, aluminum wool, a bicycle component such as a brake wire or a spoke, a reinforcement wire made of tempered glass, a pipe seal, a metal packing, a protection reinforcing material for a cable, a fan belt cored bar, a wire for driving an actuator, a chain, a hanger, a sound isolation mesh, and a shelf board.

More specific application examples of the fastening member include a set screw, a staple, and a drawing pin.

More specific application examples of the spring member include a spring electrode, a terminal, a connector, a semiconductor probe spring, a blade spring, and a flat spiral spring.

The aluminum alloy material is suitable also as a metal fiber to be added in order to apply conductivity to a resin-based material, a plastic material, and a cloth or the like, and to control the strength and elastic modulus thereof.

The aluminum alloy material is suitable also as a consumer member and a medical member such as an eyeglass frame, a clock belt, a nib of a fountain pen, a fork, a helmet, or an injection needle.

In addition, the aluminum alloy having a high strength of the present invention is particularly suitably used as a metal conductor constituting a health care wearable device requiring high elasticity. A high material strength not easily causing plastic deformation, and good fatigue characteristics causing no fracture even under repeated deformation are required for the metal conductor. In particular, in a case in which the conductor unites the function of an electrode directly stuck on a human body, an aluminum alloy is preferably used as compared with a metal which is apt to cause allergy such as copper. Copper reacts with sweat or the like emitted from the human body, which disadvantageously causes occurrence of discoloration or rust. However, the aluminum alloy is advantageously less likely to cause such a problem.

Hereinbefore, embodiments of the present invention have been described. However, the present invention is not limited to the above embodiments, and includes all aspects included in the concept of the present invention as defined by the claims.

[Examples]

Next, Examples and Comparative Examples are described to further clarify the effects of the present invention. However, the present invention is not limited to these Examples.

(Examples 1 to 13)

First, bars having alloy compositions shown in Table 1 and each having a diameter of 10 mm were prepared. Next, aluminum alloy wire rods (diameter: 0.07 to 2.0 mm) were produced under manufacturing conditions shown in Table 1 using the bars.

(Comparative Example 1)

In Comparative Example 1, an aluminum wire rod (diameter: 0.24 mm) was produced under a manufacturing condition shown in Table 1 using a bar made of 99.99% by mass of Al and having a diameter of 10 mm.

(Comparative Examples 2 to 7)

In Comparative Examples 2 to 7, aluminum alloy wire rods (diameter: 0.07 to 2.0 mm) were produced under manufacturing conditions shown in Table 1 using bars having alloy compositions shown in Table 1 and each having a diameter of 10 mm.

Manufacturing conditions A to K shown in Table 1 are specifically as follows.

<Manufacturing condition A>

The prepared bar was subjected to cold working [1] at a degree of working of 5.5. The bar was not subjected to refine annealing [2].

<Manufacturing condition B>

The bar was subjected to cold working [1] under the same condition as the manufacturing condition A except that the degree of working of the cold working [1] was set to 6.5.

<Manufacturing condition C>

The bar was subjected to cold working [1] under the same condition as the manufacturing condition A except that the degree of working of the cold working [1] was set to 7.5.

<Manufacturing condition D>

The bar was subjected to cold working [1] under the same condition as the manufacturing condition A except that the degree of working of the cold working [1] was set to 10.0.

<Manufacturing condition E>

The prepared bar was subjected to cold working [1] at a degree of working of 4.5, and then subjected to refine annealing [2] at a treatment temperature of 60°C for a retention time of 1 hour.

<Manufacturing condition F>

The bar was subjected to cold working [1] and refine annealing [2] under the same condition as the manufacturing condition E except that the degree of working of the cold working [1] was set to 5.5.

9

<Manufacturing condition G>

The bar was subjected to cold working [1] and refine annealing [2] under the same condition as the manufacturing condition E except that the degree of working of the cold working [1] was set to 6.5.

<Manufacturing condition H>

The bar was subjected to cold working [1] and refine annealing [2] under the same condition as the manufacturing condition E except that the degree of working of the cold working [1] was set to 10.0.

<Manufacturing condition I>

The bar was subjected to cold working [1] under the same condition as the manufacturing condition A except that the degree of working of the cold working [1] was set to 3.5.

<Manufacturing condition J>

The prepared bar was subjected to an aging precipitation heat treatment [0] at a treatment temperature of 180°C for a retention time of 10 hours, and then subjected to cold working [1]. However, since breaking of wire occurred frequently, the work was stopped.

<Manufacturing condition K>

The prepared bar was subjected to cold working [1]. However, since breaking of wire occurred frequently, the work was stopped.

(Comparative Example 8): Manufacturing condition P of Table 1

A virgin Al ingot for electrical purposes (JIS H 2110), an Al-Mg master alloy, and an Al-Si master alloy were dissolved, to manufacture a molten metal having an alloy composition of Al-0.7% by mass Mg-0.7% by mass Si. This was cast, and a billet having a diameter of 60 mm and a length of 240 mm was subjected to hot extruding at 470°C, to obtain a drawing stock. The obtained drawing stock was subjected to first wire drawing working at a working rate of 70% (degree of working: 1.20), a primary heat treatment at 130°C for 5 hours, second wire drawing working at a working rate of 60% (degree of working: 0.92), and thereafter a secondary heat treatment at 160°C for 4 hours, to obtain an aluminum alloy wire rod (diameter: 2 mm).

(Comparative Example 9): Manufacturing condition Q of Table 1

From a molten metal having an alloy composition of Al-0.51% by mass Mg-0.58% by mass Si-0.79% by mass Fe, a bar having a diameter of 10 mm was obtained by a Properzi type continuous casting rolling machine. The obtained bar was peeled so as to have a diameter of 9.5 mm. The bar was subjected to first wire drawing working at a degree of working of 2.5, a primary heat treatment at 300 to 450°C for 0.5 to 4 hours, second wire drawing working at a degree of working of 4.3, a secondary heat treatment at 612°C for 0.03 seconds in a continuous current heat treatment (corresponding to temper annealing [2]), and thereafter an aging heat treatment at 150°C for 10 hours, to obtain an aluminum alloy wire rod (diameter: 0.31 mm).

(Comparative Example 10): Manufacturing condition R of Table 1

Into a graphite crucible, aluminum having a purity of 99.95% by mass, magnesium having a purity of 99.95% by mass, silicon having a purity of 99.99% by mass, and iron having a purity of 99.95% by mass were charged in predetermined amounts, and stirred and melted at 720°C by high-frequency induction heating, to manufacture a molten metal having an alloy composition of Al-0.6% by mass Mg-0.3% by mass Si-0.05% by mass Fe. This was moved to a container provided with a graphite die, and subjected to continuous casting at a casting speed of about 300 mm/min via the water-cooled graphite die, to obtain a wire having a diameter of 10 mm and a length of 100 mm.

A cumulative equivalent strain of 4.0 was introduced by the ECAP method. A recrystallization temperature obtained at this stage was 300°C. The wire was subjected to prior heating in an inactive gas atmosphere at 250°C for 2 hours.

Next, the wire was subjected to a first wire drawing treatment at a working rate of 29% (degree of working:

0.34). A recrystallization temperature obtained at this stage was 300°C. The wire was subjected to a primary heat treatment in an inactive gas atmosphere at 260°C for 2 hours.

Then, the wire was passed at a drawing speed of 500 mm/min in a water-cooled wire drawing die, to be subjected to a second wire drawing treatment at a degree of working of 9.3. A recrystallization temperature obtained at this stage was 280°C. The wire was subjected to a secondary heat treatment in an inactive gas atmosphere at 220°C for 1 hour, to obtain an aluminum alloy wire rod (diameter: 0.08 mm).

[Evaluation]

The aluminum alloy wire rods according to the Examples and the Comparative Examples were subjected to evaluation of characteristics to be shown below. The evaluation conditions of the characteristics are as follows. The results are shown in Table 1.

[1] Alloy composition

Measurement was performed by the emission spectrochemical analysis method according to JIS H1305: 2005. The measurement was performed using an emission spectrophotometer (manufactured by Hitachi High-Tech Science Corporation).

[2] Structure observation

A metallographic structure was observed by scanning transmission electron microscopy (STEM) using a transmission electron microscope JEM-3100FEF (manufactured by JEOL Co., Ltd.).

An observation sample to be used was cut at a cross section parallel to the longitudinal direction (wire drawing direction X) of the wire rod by focused ion beam (FIB) so as to have a thickness of 100 nm $\pm$ 20 nm, and finished by ion milling.

In the STEM observation, a boundary in which contrasts were discontinuously different was recognized as a crystal grain boundary with the difference between contrasts as the orientation of a crystal using gray contrast. There may be no difference between gray contrasts even if crystal orientations are different depending on the diffraction condition of an electron beam. In that case, while an angle between the electron beam and the sample was changed by inclining by $\pm$ 3 degrees by two sample rotational axes orthogonal to each other in a sample stage of an electron microscope, the observed surface was photographed under a plurality of diffraction conditions, to recognize the grain boundary. The observed field of view was set to (15 to 40) $\mu$m $\times$ (15 to 40) $\mu$m, and a center and a position near the middle of a surface layer (center side position separated by about 1/4 of a wire diameter from the surface layer side) on a line corresponding to a wire diameter direction (direction perpendicular to a longitudinal direction) in the cross section were observed. The observed field of view was appropriately adjusted according to the size of a crystal grain.

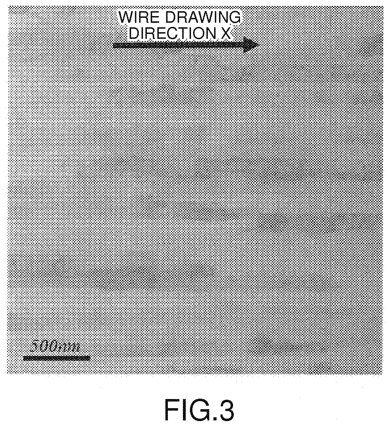

In the cross section parallel to the longitudinal direction (wire drawing direction X) of the wire rod, the presence or absence of the fibriform metallographic structure was determined from an image photographed during the STEM observation. Fig. 3 shows a part of the STEM image of the cross section parallel to the longitudinal direction (wire drawing direction X) of the wire rod of Example 4 photographed during the STEM observation. In the present Examples, the fibriform metallographic structure was estimated as "presence" in a case in which the metallographic structure as shown in Fig. 3 was observed.

Furthermore, in each observed field of view, optional 100 crystal grains were selected. The size perpendicular to the longitudinal direction of each crystal grain and the size parallel to the longitudinal direction of the crystal grain were measured, to calculate the aspect ratio of the crystal grain. Furthermore, the average values of the size perpendicular to the longitudinal direction of the crystal grains and the aspect ratios were calculated from the total of the observed crystal grains. In a case in which the observed crystal grains were clearly larger than 400 nm, the number of selection of the crystal grains whose size was measured was reduced, and the average value thereof was calculated. In a case in which the size parallel to the longitudinal direction of the crystal grains was clearly 10 or more times the size perpendicular to the longitudinal direction of the crystal grains, the crystal grains were determined to uniformly have an aspect ratio of 10 or more.

[3] Tensile strength

According to JIS Z2241: 2001, a tensile test was performed using a precision universal tester (manufactured by Shimadzu Corporation), to measure a tensile strength (MPa). The test was carried out under conditions of a distance between marks of 10 cm and a deformation speed of 10 mm/min. Three of the wire rods were subjected to the tensile test, and the average values (N = 3) thereof were defined as the tensile strength of the wire rod. The tensile strength

EP 3 486 342 B1

was preferably larger, and the tensile strength of 480 MPa or more was considered to be at a pass level in the present Examples.

[4] Vickers hardness (HV)

According to JIS Z 2244: 2009, a Vickers hardness (HV) was measured using a microhardness tester HM-125 (manufactured by Akashi Corporation (current Mitutoyo Corporation)). At this time, a test force was set to 0.1 kgf, and a retention time was set to 15 seconds. Measurement positions were a center and a position near the middle of a surface layer (center side position separated by about 1/4 of a wire diameter from the surface layer side) on a line corresponding to a wire diameter direction (direction perpendicular to a longitudinal direction) in the cross section parallel to the longitudinal direction of the wire rod. The average value (N = 5) of the measured values was defined as the Vickers hardness (HV) of the wire rod. In a case in which the difference between the maximum value and the minimum value of the measured values was 10 or more, the number of measurements was further increased, and the average value (N = 10) was defined as the Vickers hardness (HV) of the wire rod. The Vickers hardness (HV) was preferably greater, and the Vickers hardness of 125 or more was considered to be at a pass level in the present Examples.

12

[Table 1]

| | | Alloy composition [% by mass] | | | | | Manufacturing condition | Evaluation of structure | | | Evaluation of characteristics | |
|---|---|---|---|---|---|---|---|---|---|---|---|---|
| | | Mg | Si | Fe | Sc | Al and inevitable impurities | | Fibriform metallographic structure | Average value of size perpendicular to longitudinal direction of cry stal grains | Aspect ratio | Tensile strength | Vickers hardness |
| | | | | | | | | | | | MPa | HV |
| Examples | 1 | 0.63 | 0.61 | 0.21 | - | Balance | A | Presence | 240nm | >10 | 490 | 130 |
| | 2 | 0.63 | 0.61 | 0.21 | - | Balance | B | Presence | 190nm | >10 | 530 | 143 |
| | 3 | 0.63 | 0.61 | 0.21 | - | Balance | C | Presence | 150nm | >10 | 570 | 153 |
| | 4 | 0.63 | 0.61 | 0.21 | - | Balance | D | Presence | 120nm | >10 | 670 | 180 |
| | 5 | 0.63 | 0.61 | 0.21 | - | Balance | E | Presence | 250nm | >10 | 490 | 128 |
| | 6 | 0.63 | 0.61 | 0.21 | - | Balance | F | Presence | 210nm | >10 | 520 | 141 |
| | 7 | 0.63 | 0.61 | 0.21 | - | Balance | G | Presence | 170nm | >10 | 540 | 148 |
| | 8 | 0.63 | 0.61 | 0.21 | - | Balance | H | Presence | 140nm | >10 | 620 | 162 |
| | 9 | 0.18 | 1.95 | 0.11 | - | Balance | G | Presence | 130nm | >10 | 620 | 165 |
| | 10 | 0.22 | 0.22 | 0.15 | - | Balance | C | Presence | 180nm | >10 | 540 | 144 |
| | 11 | 0.63 | 0.61 | 1.42 | - | Balance | C | Presence | 130nm | >10 | 590 | 151 |
| | 12 | 0.91 | 0.88 | 0.15 | - | Balance | D | Presence | 90nm | >10 | 680 | 181 |
| | 13 | 1.76 | 0.31 | 0.11 | - | Balance | H | Presence | 80nm | >10 | 660 | 174 |

13

(continued)

| | | Alloy composition [% by mass] | | | | | Manufacturing condition | Evaluation of structure | | | Evaluation of characteristics | |
|---|---|---|---|---|---|---|---|---|---|---|---|---|
| | | Mg | Si | Fe | Sc | Al and inevitable impurities | | Fibriform metallographic structure | Average value of size perpendicular to longitudinal direction of cry stal grains | Aspect ratio | Tensile strength | Vickers hardness |
| | | | | | | | | | | | MPa | HV |
| comparative Examples | 1 | - | - | - | - | Balance | C | **Absence** | **0.8 $\mu$ m** | 5 | **150** | **43** |
| | 2 | **0.17** | **0.17** | 0.21 | - | Balance | A | **Absence** | **340nm** | >10 | **380** | **103** |
| | 3 | - - | **0.02** | 0.03 | **0.31** | Balance | C | **Absence** | **0.4 $\mu$ m** | >10 | 58 | 210 |
| | 4 | **1.82** | **2.11** | 0.21 | - | Balance | K | - | - | - | - | - |
| | 5 | 0.91 | 0.88 | **1.62** | - | Balance | K | - | - - | - - | - - | - - |
| | 6 | 0.63 | 0.61 | 0.21 | - | Balance | J | - | - | - | - | - |
| | 7 | 0.63 | 0.61 | 0.21 | - | Balance | I | **Absence** | **0.5 $\mu$ m** | >10 | 410 | 114 |
| | 8 | 0.70 | 0.70 | 0.03 | - | Balance | P | **Absence** | **0.5 $\mu$ m** | >10 | **440** | 119 |
| | 9 | 0.51 | 0.58 | 0.79 | - | Balance | Q | **Absence** | **5 $\mu$ m** | 2 | **280** | 85 |
| | 10 | 0.60 | 0.30 | 0.05 | - | Balance | R | **Absence** | **0.5 $\mu$ m** | >10 | **260** | 75 |

(Note) Underlined bold characters in Table show wire rods outside the appropiate range of the present invention and wire rods of which evaluation results do notreach the pass level in the present Examples.

From the results of Table 1, it was confirmed that the aluminum alloy wire rod according to each of Examples 1 to 10,12 and 13 (example 11 falls outside the scope of protection). of the present invention has a specific alloy composition, and the aluminum alloy wire rod has a fibriform metallographic structure where crystal grains extend so as to be aligned in one direction; and in a cross section parallel to the one direction, a size perpendicular to a longitudinal direction of the crystal grains is 270 nm or less. Fig. 3 shows the STEM image of the cross section parallel to the wire drawing direction of the aluminum alloy wire rod according to Example 4. The same metallographic structure as that of Fig. 3 was confirmed also in the cross section parallel to the longitudinal direction of the aluminum alloy wire rod according to each of Examples 1 to 3 and 5 to 13.

It was confirmed that the aluminum metal wire rod according to each of Examples 1 to 13 of the present invention having such a specific metallographic structure exhibits a high strength comparable to that of an iron-based or copper-based metal material (for example, tensile strength: 480 MPa or more, Vickers hardness (HV): 125 or more).

On the other hand, it was confirmed that the alloy composition of the aluminum alloy wire rod of each of Comparative Examples 1 to 3 and 7 to 10 does not satisfy the appropriate range of the present invention, or does not have a fibriform metallographic structure where crystal grains extend so as to be aligned in one direction; and a size perpendicular to a longitudinal direction of the crystal grains is also 500 nm or more. It was confirmed that the aluminum alloy wire rod of each of Comparative Examples 1 to 3 and 7 to 10 has a remarkably poorer tensile strength and Vickers hardness (HV) than those of the aluminum alloy wire rod of each of Examples 1 to 13 according to the present invention.

Since the alloy composition of the wire rod in each of Comparative Examples 4 and 5 did not satisfy the appropriate range of the present invention, working cracks were confirmed to occur in wire drawing working [1]. Since an aging precipitation heat treatment [0] was performed before the wire drawing working [1] in Comparative Example 6, working cracks were confirmed to occur during the wire drawing working [1] performed at a high degree of working in order to increase the crystal grain boundary.

**Claims**

1. An aluminum alloy material has an alloy composition consisting of 0.2 to 1.8% by mass of Mg, 0.2 to 2.0% by mass of Si, 0.05 to less than 0.60% by mass of Fe, with the balance containing Al and inevitable impurities, wherein

   the aluminum alloy material has a fibriform metallographic structure where crystal grains extend so as to be aligned in one direction; and
   in a cross section parallel to the one direction, an average value of a size perpendicular to a longitudinal direction of the crystal grains is 270 nm or less, wherein the aluminum alloy material has a tensile strength of 480 MPa or more, and wherein the inevitable impurities include B, Ti, Cr, Mn, Cu, Ni, Zn, Zr, Bi, Pb, Ga, Sn and Sr and the upper limit of the content of each of the components is 0.05% by mass or less, and the total amount of the components is 0.15% by mass or less.

2. The aluminum alloy material according to claim 1, wherein an aspect ratio of the crystal grains is in excess of 10.

3. The aluminum alloy material according to claim 1 or 2, wherein the aluminum alloy material has a Vickers hardness (HV) of 125 to 250.

4. A conductive member comprises the aluminum alloy material according to any one of claims 1 to 3.

5. A battery member comprises the aluminum alloy material according to any one of claims 1 to 3.

6. A fastening component comprises the aluminum alloy material according to any one of claims 1 to 3.

7. A spring component comprises the aluminum alloy material according to any one of claims 1 to 3.

8. A structural component comprises the aluminum alloy material according to any one of claims 1 to 3.

**Patentansprüche**

1. Aluminiumlegierungsmaterial, das eine Legierungszusammensetzung aufweist, die aus 0,2 bis 1,8 Masse-% Mg, 0,2 bis 2,0 Masse-% Si, 0,05 bis weniger als 0,60 Masse-% Fe besteht, wobei der Rest Al und unvermeidbare Verunreinigungen enthält, wobei

das Aluminiumlegierungsmaterial eine fibriforme metallographische Struktur aufweist, in der sich Kristallkörner so erstrecken, dass sie in einer Richtung ausgerichtet sind; und in einem Querschnitt parallel zu der einen Richtung ein Durchschnittswert einer Größe senkrecht zu einer Längsrichtung der Kristallkörner 270 nm oder weniger beträgt, wobei das Aluminiumlegierungsmaterial eine Zugfestigkeit von 480 MPa oder mehr aufweist und wobei die unvermeidbaren Verunreinigungen B, Ti, Cr, Mn, Cu, Ni, Zn, Zr, Bi, Pb, Ga, Sn und Sr beinhalten und die Obergrenze des Gehalts jeder der Komponenten 0,05 Masse-% oder weniger beträgt und die Gesamtmenge der Komponenten 0,15 Masse-% oder weniger beträgt.

2.  Aluminiumlegierungsmaterial nach Anspruch 1, wobei ein Seitenverhältnis der Kristallkörner höher als 10 ist.

3.  Aluminiumlegierungsmaterial nach Anspruch 1 oder 2, wobei das Aluminiumlegierungsmaterial eine Vickershärte (HV) von 125 bis 250 aufweist.

4.  Leitfähiges Element, das das Aluminiumlegierungsmaterial nach einem der Ansprüche 1 bis 3 umfasst.

5.  Batterieelement, das das Aluminiumlegierungsmaterial nach einem der Ansprüche 1 bis 3 umfasst.

6.  Befestigungskomponente, die das Aluminiumlegierungsmaterial nach einem der Ansprüche 1 bis 3 umfasst.

7.  Federkomponente, die das Aluminiumlegierungsmaterial nach einem der Ansprüche 1 bis 3 umfasst.

8.  Strukturkomponente, die das Aluminiumlegierungsmaterial nach einem der Ansprüche 1 bis 3 umfasst.

**Revendications**

1.  Matériau d'alliage d'aluminium ayant une composition d'alliage constituée de 0,2 à 1,8 % en masse de Mg, de 0,2 à 2,0 % en masse de Si, de 0,05 à moins de 0,60 % en masse de Fe, le reste contenant de l'Al et des impuretés inévitables, dans lequel

    le matériau d'alliage d'aluminium a une structure métallographique fibriforme où les grains cristallins s'étendent de manière à être alignés dans une direction ; et
    dans une coupe transversale parallèle à une direction, une valeur moyenne d'une taille perpendiculaire à une direction longitudinale des grains cristallins est de 270 nm ou moins, dans lequel le matériau d'alliage d'aluminium a une résistance à la traction supérieure ou égale à 480 MPa, et dans lequel les impuretés inévitables comportent B, Ti, Cr, Mn, Cu, Ni, Zn, Zr, Bi, Pb, Ga, Sn et Sr et la limite supérieure de la teneur de chacun des composants est inférieure ou égale à 0,05 % en masse, et la quantité totale des composants est inférieure ou égale à 0,15 % en masse.

2.  Matériau d'alliage d'aluminium selon la revendication 1, dans lequel un rapport d'aspect des grains cristallins est supérieur à 10.

3.  Matériau d'alliage d'aluminium selon la revendication 1 ou 2, dans lequel le matériau d'alliage d'aluminium a une dureté Vickers (HV) de 125 à 250.

4.  Élément conducteur comprenant le matériau d'alliage d'aluminium selon l'une quelconque des revendications 1 à 3.

5.  Élément de batterie comprenant le matériau d'alliage d'aluminium selon l'une quelconque des revendications 1 à 3.

6.  Composant de fixation comprenant le matériau d'alliage d'aluminium selon l'une quelconque des revendications 1 à 3.

7.  Composant de ressort comprenant le matériau d'alliage d'aluminium selon l'une quelconque des revendications 1 à 3.

8.  Composant structural comprenant le matériau d'alliage d'aluminium selon l'une quelconque des revendications 1 à 3.

ONE DIRECTION
(WORKING DIRECTION) X

t

10

10

Z
Y
X

FIG.1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5331585 A
- JP 9137244 A
- JP 2001131721 A

- JP 2010159445 A
- JP 2003027172 A
- JP 2010280969 A